# EUROPEAN PATENT SPECIFICATION

(11) **EP 1 036 273 B1**
(45) Date of publication and mention of the grant of the patent: **03.09.2003**
(21) Application number: 98957103.9
(22) Date of filing: 01.12.1998
(51) Int. Cl.: F03B 13/18

(54) **WAVE-POWERED PRIME MOVER**
WASSERWELLENBETRIEBENES KRAFTWERK
GENERATEUR DE FORCE MOTRICE ALIMENTE PAR LES VAGUES

(30) Priority: 01.12.1997 IE 970850
(43) Date of publication of application: 20.09.2000
(73) Proprietor: HYDAM TECHNOLOGY LIMITED, Killarney County Kerry (IE)
(72) Inventor: MURTAGH, Joseph, Celbridge, County Kildare (IE)
(74) Representative: McKeown, Yvonne Mary
(86) International application number: IE9800099
(87) International publication number: WO99028622

(56) References cited:
- EP-A- 0 035 346
- EP-A- 0 365 325
- DE-A- 2 921 381
- DE-C- 4 304 150
- US-A- 4 023 515
- US-A- 4 105 368
- US-A- 4 134 023
- US-A- 4 781 023

## Description

The present invention relates to wave-powered prime movers of the type adapted to extract energy primarily from ocean swell.

European Patent Specification No. 0 365 325-B discloses a wave powered prime mover for harnessing primarily the energy of the ocean swell. The prime mover comprises two movable pontoons spaced apart by a floating inertial body. Each pontoon is independently movable relative to the inertial body to activate a pump. The inertial body is provided with an inertia plate for maintaining the inertial body substantially stationary in the water irrespective of the prevailing wave frequency and/or amplitude. The inertia plate is connected to the inertial body by at least one shaft and is movable relative to the inertial body. When the prime mover is being towed through water, the inertia plate is raised to decrease resistance. Then, when the prime mover is in its operational position, the plate is lowered into the water to keep the inertial body substantially stationary.

In general, energy derived from such wave-powered prime movers is provided as a low frequency oscillating waveform. The energy must be converted to a useful frequency and/or type before it can be utilised. However, standard techniques for converting energy from a low frequency waveform to a high frequency waveform are inherently inefficient.

US-A-4, 023,515 discloses a floating wave powered pump having a plurality of floats connected to a floating platform by a double acting piston pump to gather energy derived from the relative movement between the float and the platform. Seawater is pumped by the device.

US-A-4, 105, 368 discloses a floating wave powered pump having a primary float surrounded by satellite floats which can move relative to one another. The motion of the floats is converted by hydraulic fluid into pressure accumulators and the stored pressure can be selectively tapped as a source of power.

US-A-781,023 teaches a wave driven generation system in which a plurality of buoyant raft energy absorber units are connected to a stable mooring assembly. Energy collected by the relative movement between the rafts and the mooring assembly is converted into mechanical, hydraulic and/or electrical energy. Accumulators are used to control and store pressure.

DE-A-2 921 381 likewise teaches a device in which movable pontoons are connected to a platform and a hydraulic pump is used to pressurise oil. A pressure chamber is provided for storing and controlling the pressure for delivery to a turbine or hydraulic motor.

It is an object of the present invention to seek to alleviate the disadvantages associated with prior art wave-powered prime movers and to provide an improved power take-off and damping mechanism for such a device.

Accordingly, the present invention provides a power take-off and damping mechanism for a wave-powered prime mover of the type having at least two pontoons which move relative to one another to do work as defined in the appended claims.

The prime mover may be anchored to underlying seabed or otherwise secured to moor it. In use for generating energy, the prime mover in its totality will be moored, but the mooring must be effected in such a way as to enable the inertial body to have some freedom to heave, sway and/or oscillate within the confines permitted by the inertia plate.

In a preferred arrangement, the present invention provides a wave-powered prime mover of the type comprising two movable pontoons spaced apart by a floating inertial body, each pontoon being independently movable relative to the inertial body to activate a pump, the inertial body having an inertia plate operable to maintain the inertial body substantially stationary in water and a power take-off and damping mechanism, the mechanism comprising:
means for converting the motion of the pontoons into hydraulic pressure energy, said means comprising at least one linear oil pump which transfers energy across a transfer barrier to sea water;
means for rectifying the pressure energy into a uni-directional form;
control means for regulating the pressure energy; and
a feedback means for varying the damping parameters of a damping means.

The means for converting the motion of the pontoons into pressure energy comprises at least one linear hydraulic pump connected between each movable pontoon and the inertial body.

The means for rectifying the pressure energy comprises a plurality of non-return valves in conjunction with at least one pressure accumulator.

The inertia plate is preferably disposed at one end of a shaft, the other end of which is connected to the inertial body. Preferably, the shaft is movable to vary the distance between the plate and the inertial body.

The damping parameters of the prime mover are affected by the both depth of the inertia plate in the water and the freedom of movement of the pontoons with respect to the inertial body. The linear hydraulic pumps directly affect the freedom of movement of the oscillating pontoons.

The feedback means comprises a plurality of valves adjustable to regulate back-pressure in the or each linear hydraulic pump thereby varying the damping parameters of the relative motion between the inertial body and each independently movable pontoon.

Preferably, the damping parameters are varied by altering the back-pressure to the or each linear pump.

A hydraulic circuit is provided to extract hydraulic pressure energy from the relative motion of the oscillating pontoons. The circuit comprises at least one linear hydraulic pump connectable between the inertial body and a pontoon, and a pressure manifold in which hydraulic pressure energy transferred from the pump along hydraulic lines is stored when the pump is moved between an extended position and a retracted position.

Preferably, the circuit includes, for each pump, a first accumulator for accepting hydraulic pressure energy when the pump is forced from the extended position to the retracted position, a second accumulator for accepting hydraulic pressure energy when the pump is forced from the retracted position to the extended position, and a plurality of check valves to ensure energy derived from the pump is diverted to the pressure manifold.

The hydraulic circuit is preferably split into two portions, one utilising a stored hydraulic fluid such as oil and the other utilising the water on which the prime mover floats, the two portions being isolated by a transfer barrier disposed in each accumulator.

A plurality of pumps are connectable to the pressure manifold.

The hydraulic circuit is duplicated to extract energy from the relative motion of the inertial body and the other pontoon.

The or each pressure manifold provides pressurised fluid (preferably water) for activating a turbine to extract electrical energy or for supplying high pressure water to a reverse osmosis plant to prepare drinking water from salt water.

The invention will now be described more particularly with reference to the accompanying drawings which show, by way of example only, one embodiment of power take-off and damping mechanism according to the invention. In the drawings:
Figure 1 is a side elevation of a wave-powered prime mover;
Figure 2 is a plan view of the prime mover;
Figures 3a to 3c are a side elevation, an end elevation and a plan view, respectively, of the inertial body of the prime mover, showing in detail the hydraulic circuit which comprises the power take-off and damping mechanism;
Figure 4 is a schematic diagram of the hydraulic circuit for one linear pump; and
Figure 5 is a perspective schematic view of a power transfer mechanism.

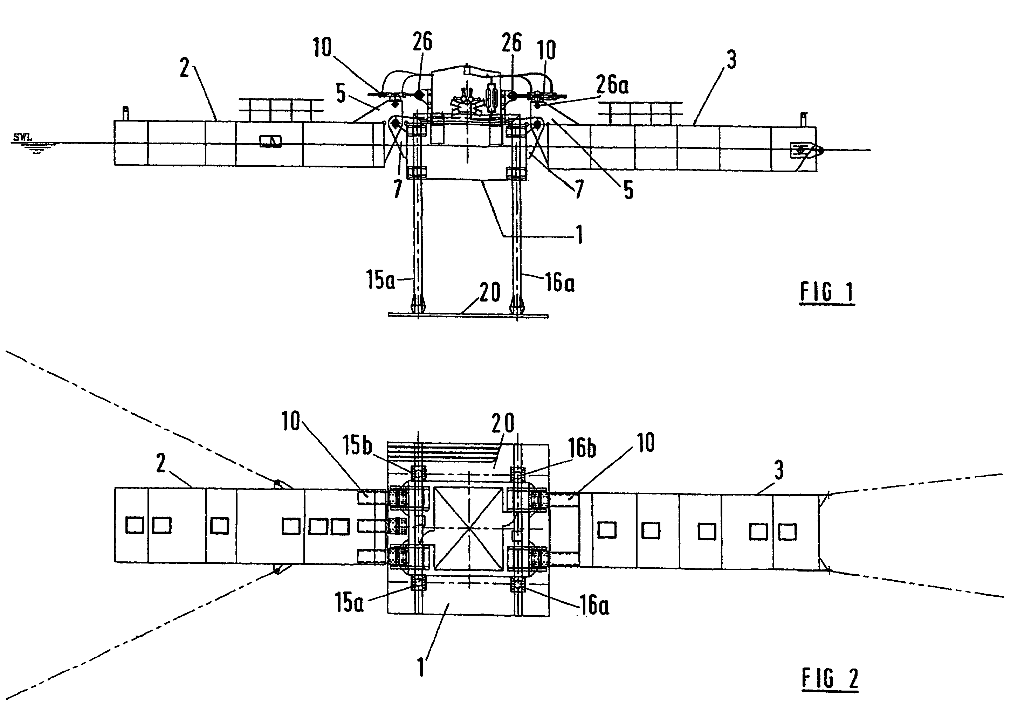

Referring now to the drawings and initially to Figures 1 and 2, the prime mover includes a floating inertial body or barge 1 having independently pivotally connected floating pontoons 2,3 attached thereto. Each pontoon 2,3 has hinges 5 for connecting to corresponding hinges 7 of the inertial body. Movement of a pontoon 2,3 relative to the inertial body 1 under the influence of the ocean swell or waves operates pumps 10 provided between the inertial body 1 and the respective pontoons 2,3.

The width of the pontoons 2,3 may be selected to suit the desired output requirement, typical wave frequency and/or amplitude at any chosen location, preferably to maximise energy output. The pontoons 2,3 are placed on opposite sides of the inertial body 1. In use the prime mover is anchored or otherwise tethered to avoid drift and due to the orientation of the pontoons with respect to the inertial body, that is to say, with their longitudinal axes being mutually parallel, the prime mover orients itself at right angles to the wave or swell direction, resulting in maximum energy extraction by the independently operating pontoons 2,3 which move relative to the inertial body. The tethering does not affect the relative position of the inertial body in the water and does not affect ability of the damping assembly (described below) to maintain it substantially vertically stationery in the water.

The inertial body 1 is provided with an assembly for maintaining the body 1 substantially stationary in the water when in use. The assembly comprises two pairs of spaced apart legs 15a, 15b, 16a,16b which are mutually parallel. Each pair of legs are connected to the inertial body at one end and are connected to an inertia plate 20 at their lower ends. The assembly may be raised or lowered relative to the inertial body by means of winches and/or hydraulic operating means (not shown). The optimum depth of the plate in the water is approximately 9 metres.

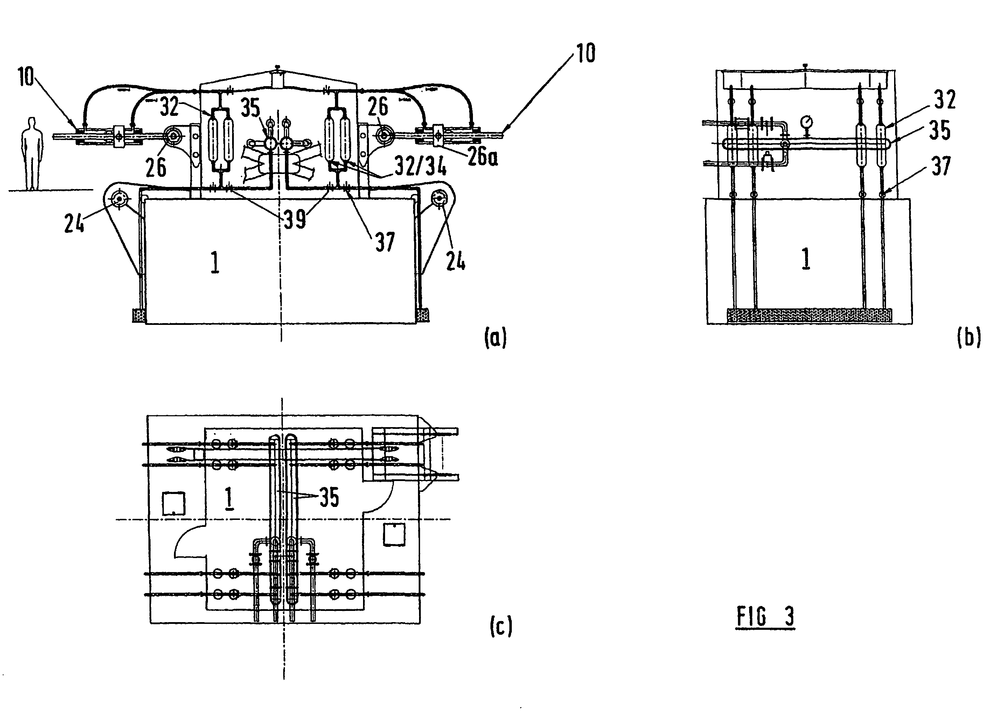

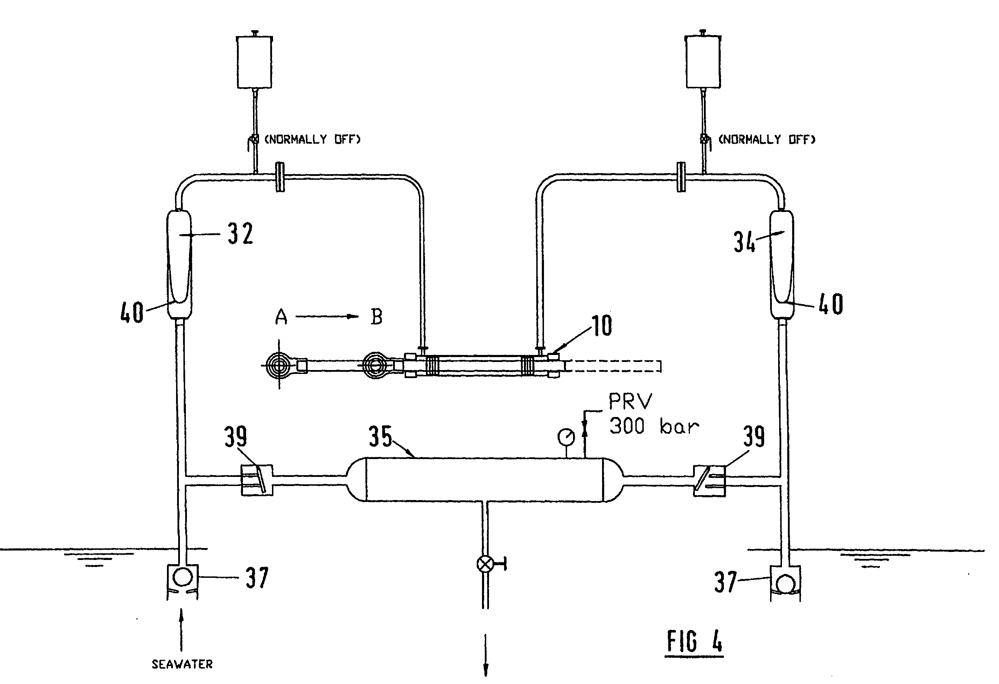

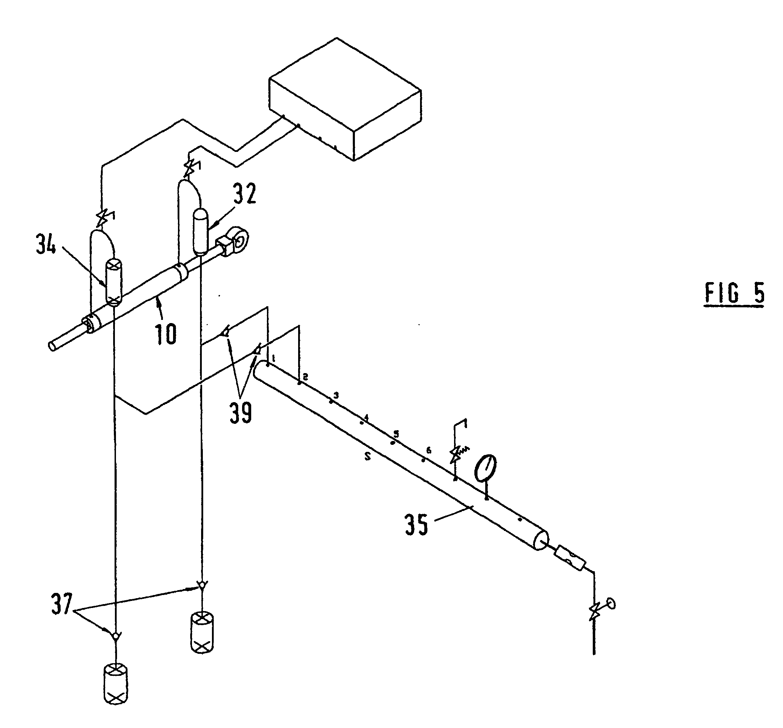

Figures 3a to 3c are detailed views of the inertial body 1. The inertial body 1 is a substantially hollow vessel having at least two hinge couplings 24 on each side for connecting to the pontoons 2,3. Linkages 26 are also provided for linear pumps 10 which are fixed between said linkages 26 and corresponding linkages 26a on the pontoons 2,3. The pumps 10 are operable to extend and contract with the relative movement between the inertial body 1 and the respective pontoons 2,3 to generate hydraulic pressure in a hydraulic circuit which is shown in detail in Figures 4 and 5.

The hydraulic circuit is provided to extract energy from waves or ocean swell by manipulating hydraulic pressure energy from the relative motion of the movable pontoons 2,3. One hydraulic circuit is provided for each pontoon 2,3. Each hydraulic circuit comprises at least two pumps 10, first accumulators 32 for accepting hydraulic pressure energy when each pump 10 is forced from an extended position (position A, Figure 4) to a retracted position (position B, Figure 4), second accumulators 34 for accepting hydraulic pressure energy when each pump 10 is forced from the retracted position to the extended position, a pressure manifold 35 and a series of foot valves 37 and check valves 39 to ensure such energy is stored in the manifold 35. In one portion of the circuit, a stored hydraulic fluid such as oil is used to transfer energy and in the other portion of the circuit, sea water is used as the hydraulic medium. The two fluids are separated by a transfer barrier 40 disposed in each accumulator 32,34. Each accumulator comprises a 28 litre, 345 bar container. In a particularly useful arrangement, each prime mover has three pumps forward and two pumps aft, and these may be divided between two hydraulic circuits.

As detailed in Figures 4 and 5, when the linear pump 10 is driven by the movement of a pontoon, the action displaces up to 5 gallons (22.74 litres). Sea water is drawn up into the first accumulator 32 through a unidirectional foot valve 37 by the negative pressure (vacuum) generated by moving the pump from A to B. Hydraulic oil is forced out of the pump into the second accumulator 34, forcing sea water on the other side of the transfer barrier 40 through a check valve into the pressure manifold 35 which is rated at 300 bar. Conversely, when the pump 10 is driven from B to A, sea water is drawn up from the opposite foot valve 37 into the second accumulator 34 and hydraulic pressure energy forces sea water in the first accumulator 32 through its respective check value 39 into the manifold 35. From the reciprocating motion of the pump 10, pressure energy is stored in the manifold 35 to be utilised in a regulated manner. Pressurised sea water can be released controllably to drive turbines for converting the pressure energy to electrical energy or can be used directly in a reverse osmosis plant for desalinating the water.

The pressure energy derived can also be applied to altering the damping characteristics of the prime mover by varying the relative freedom of movement of the pontoons 2,3 with respect to the inertial body 1. By applying back-pressure to the pumps 10, the overall stiffness of the prime mover is increased. This stiffness in turn varies the damping parameters of the structure and alters the overall energy efficiency of the prime mover. By actively controlling back-pressure to the pumps 10, using conventional control techniques, the energy efficiency and damping parameters of the prime mover can be adjusted according to the prevailing weather, wave height and frequency and to the ocean swell.

The present invention has particular application in island communities and coastal communities where drinking water is scarce. The invention is easily adaptable for use for power generation or can be adapted to directly produce drinking water. The invention uses a minimal number of moving parts and is robust, decreasing the overall cost and maintenance cost of wave-powered prime movers. The facility to vary back-pressure in the hydraulic system allows for variable damping. Back-pressure can be controlled using a valve controlled feedback circuit which is operable using a remote control means. The prime mover can be used independently or can be linked to a plurality of other prime movers remotely controlled using standard control technology and telemetry.

It will of course be understand that the present invention is not limited to the specific details described herein, which are given by way of example only and that various modifications and alterations are possible within the scope of the invention, as defined by the appended claims.

## Claims

1. A wave-powered prime mover of the type having at least two pontoons (2,3) which move relative to one another to do work by activating a pump, the prime mover including a power take-off and damping mechanism **characterised by** comprising:-
means for converting the motion of the pontoons into hydraulic pressure energy, said means comprising at least one linear oil pump (10) which transfers energy across a transfer barrier (40) to sea water;
means (32,34,37,39) for rectifying the pressure energy into a uni-directional form;
control means for regulating the pressure energy; and
a damping means including feedback means for varying the damping parameters of the pontoons.

2. A prime mover as claimed in Claim 1 having at least two movable pontoons connected to a floating inertial body (1), each pontoon being independently movable relative to the inertial body, in which at least one linear oil pump is connected between each movable pontoon and the inertial body.

3. A prime mover as claimed in Claim 2, in which the damping means comprising means for altering the freedom of movement of the or each pontoon with respect to the inertial body by altering the back-pressure to the or each linear pump.

4. A prime mover as claimed in Claim 3, in which the feedback means comprises a plurality of valves adjustable to regulate back-pressure in the or each linear oil pump thereby varying the damping parameters by enabling the relative motion between the inertial body and each independently movable pontoon to be altered.

5. A prime mover as claimed in any preceding claim, in which the rectifying means comprises a plurality of non-return valves (37,39) acting in conjunction with at least one pressure accumulator (32,34).

6. A prime mover as claimed in any of Claims 2 to 5, including at least one hydraulic circuit for extracting hydraulic pressure energy from the relative motion of the pontoons, the circuit comprising at least one linear oil pump connected between the inertial body and a pontoon, and a pressure manifold (35) in which hydraulic pressure energy transferred from the pump along hydraulic lines is stored when the pump is moved between an extended position and a retracted position.

7. A prime mover as claimed in Claim 6, in which the circuit includes, for each pump, a first accumulator for accepting hydraulic pressure energy when the pump is forced from the extended position to the retracted position, a second accumulator for accepting hydraulic pressure energy when the pump is forced from the retracted position to the extended position, and a plurality of check valves to ensure energy derived from the pump is diverted to the pressure manifold.

8. A prime mover as claimed in Claim 7, in which the hydraulic circuit is split into two portions, one utilising stored hydraulic oil and the other utilising the sea water on which the prime mover floats, the two portions being isolated from one another by the transfer barrier disposed in each accumulator.

9. A prime mover as claimed in any of Claims 6 to 8, in which a plurality of pumps are connected to the pressure manifold.

10. A prime mover as claimed in any of Claims 6 to 9, in which the pressure manifold provides pressurised water for activating a turbine to extract electrical energy or for supplying high pressure water to a reverse osmosis plant to prepare drinking water from salt water.

11. A prime mover as claimed in any of claims 2 to 10, in which the inertial body of the prime mover includes an inertia plate (20) operable to limit the vertical movement of the inertial body in water.

## Patentansprüche

1. Wasserwellenbetriebenes Kraftwerk von dem mit mindestens zwei Pontons (2,3) ausgestatteten Typ, welche sich relativ zueinander bewegen, um auf diese Weise durch ein Aktivieren einer Pumpe eine Arbeit zu verrichten, wobei das Kraftwerk einen Kraftabtrieb und einen Dämpfungsmechanismus umfasst, **dadurch gekennzeichnet, dass** das Kraftwerk als Elemente aufweist:
• eine Vorrichtung zum Umwandeln der Bewegung der Pontons in eine hydraulische Druckenergie, wobei diese Vorrichtung mindestens eine lineare Ölpumpe (10) aufweist, welche Energie entlang einer Transferbarriere (40) an das Seewasser überträgt;
• eine Vorrichtung (32, 34, 37, 39) zum Gleichrichten der Druckenergie in eine unidirektionnelle Form;
• eine Vorrichtungen zum Kontrollieren der Regelung der Druckenergie; und
• eine Dämpfungsvorrichtung, welche Rückkopplungsvorrichtungen zum Verändern der Dämpfungsparameter der Pontons mit einschließt.

2. Kraftwerk gemäß Anspruch 1, welches mindestens zwei bewegbare Pontons aufweist, die mit einem schwimmenden Trägheitskörper (1) verbunden sind, wobei jeder Ponton unabhängig bewegbar ist in Bezug auf den Trägheitskörper, in welchem mindestens eine lineare Ölpumpe zwischen einem jeden bewegbaren Ponton und dem Trägheitskörper verbunden ist.

3. Kraftwerk gemäß Anspruch 2, bei welchem die Dämpfungsvorrichtung Hilfsmittel umfasst zum Verändern der Bewegungsfreiheit für einen oder für jeden Ponton in Bezug auf den Trägheitskörper durch Verändern des Gegendrucks zu einer oder zu jeder Linearpumpe.

4. Kraftwerk gemäß Anspruch 3, bei welchem die Rückkopplungsvorrichtung eine große Anzahl von regelbaren Ventilen aufweist, welche dazu dienen den Gegendruck in einer oder in einer jeden linearen Ölpumpe zu regeln, wodurch die Dämpfungsparameter verändert werden, indem es der relativen Bewegung zwischen dem Trägheitskörper und einem jeden unabhängig bewegbaren Ponton ermöglicht wird sich zu verändern.

5. Kraftwerk gemäß irgendeinem der vorstehenden Ansprüche, bei welchem die Vorrichtung zum Gleichrichten eine große Anzahl von Rückschlagventilen (37, 39) enthält, welche in Verbindung mit mindestens einem Druckakkumulator (32,34) arbeiten.

6. Kraftwerk gemäß irgendeinem der Ansprüche 2 bis 5, welches mindestens eine hydraulische Kreisbahn zum Extrahieren der hydraulischen Druckenergie aus der relativen Bewegung der Pontons mit einschließt, wobei die Kreisbahn mindestens eine lineare Ölpumpe umfasst, welche zwischen dem Trägheitskörper und einem Ponton verbunden ist, sowie einen Druckverteiler (35), in welchem hydraulische Druckenergie gespeichert wird, welche von der Pumpe entlang den hydraulischen Leitungen übertragen wird, wenn die Pumpe sich zwischen einer ausgefahrenen Position und einer eingefahrenen Position bewegt.

7. Kraftwerk gemäß Anspruch 6, bei welchem die Kreisbahn für eine jede Pumpe einen ersten Akkumulator für die Aufnahme der hydraulischen Druckenergie enthält, wenn die Pumpe von der ausgefahrenen Position in die eingefahrene Position gezwungen wird, einen zweiten Akkumulator für die Aufnahme der hydraulischen Druckenergie, wenn die Pumpe von der eingefahrenen Position in die ausgefahrene Position gezwungen wird, sowie eine große Anzahl von Prüfventilen, um sicher zu stellen, dass die abgeleitete Energie aus der Pumpe zu dem Druckverteiler abgeleitet wird.

8. Kraftwerk gemäß Anspruch 7, bei welchem die hydraulische Kreisbahn in zwei Teile unterteilt ist, ein Teil der das gespeicherte Hydrauliköl verwendet und der andere Teil der das Seewasser verwendet, auf dem das Kraftwerk schwimmt, wobei die zwei Teile der eine von dem anderen durch die Transferbarriere isoliert sind, welche in einem jeden Akkumlator angeordnet ist.

9. Kraftwerk gemäß irgendeinem der Ansprüche 6 bis 8, bei welchem eine große Anzahl von Pumpen mit dem Druckverteiler verbunden ist.

10. Kraftwerk gemäß irgendeinem der Ansprüche 6 bis 9, bei welchem der Druckverteiler unter Druck stehendes Wasser liefert für die Aktivierung einer Turbine, um elektrische Energie zu gewinnen oder um unter einem hohen Druck stehendes Wasser an eine Anlage einer Umkehrosmose zu liefern, um Trinkwasser ausgehend von Salzwasser aufzubereiten.

11. Kraftwerk gemäß irgendeinem der Ansprüche 2 bis 10, bei welchem der Trägheitskörper des Kraftwerks eine Trägheitsplatte (20) enthält, welche betrieben werden kann, um die vertikale Bewegung des Trägheitskörpers in dem Wasser zu begrenzen.

## Revendications

1. Générateur (resp. machine motrice) actionné par les vagues du genre de ceux pourvus d'au moins deux pontons (2, 3) qui se déplacent l'un par rapport à l'autre pour exécuter un travail en activant une pompe, générateur qui comporte une prise de force ainsi qu'un mécanisme d'amortissement et qui est **caractérisé en ce qu'**il comprend ;
des moyens pour convertir le mouvement des pontons en une énergie de pression hydraulique, lesdits moyens comportant au moins une pompe à huile linéaire (10) qui transfert l'énergie à travers une barrière de transfert (40) à de l'eau de mer ;
des moyens (32, 34, 37, 39) pour redresser l'énergie de pression en une forme unidirectionnelle ;
des moyens de contrôle pour régler l'énergie de pression ; et
des moyens d'amortissement, y compris des moyens de rétroaction, pour varier les paramètres d'amortissement des pontons.

2. Générateur tel que revendiqué dans la revendication 1, disposant d'au moins deux pontons mobiles reliés à un corps flottant inertiel (1), chaque ponton étant indépendamment mobile par rapport au corps inertiel, dans lequel au moins une pompe à huile linéaire est connectée entre chaque ponton mobile et le corps inertiel.

3. Générateur tel que revendiqué dans la revendication 2, dans lequel les moyens d'amortissement comprennent des moyens servant à modifier la liberté de mouvement du ponton ou de chacun des pontons par rapport au corps inertiel en modifiant la pression en retour vers la pompe ou chacune des pompes.

4. Générateur tel que revendiqué dans la revendication 3, dans lequel les moyens de rétroaction comportent un grand nombre de soupapes réglables pour régler la pression en retour dans la pompe à huile linéaire ou dans chacune des pompes à huile linéaires pour varier de cette façon les paramètres d'amortissement en permettant au mouvement relatif entre le corps inertiel et chaque ponton indépendamment mobile d'être modifié.

5. Générateur tel que revendiqué dans une quelconque des revendications qui précèdent, dans lequel les moyens pour redresser comportent un grand nombre de soupapes de non-retour (37, 39) agissant en conjonction avec au moins un accumulateur de pression (32, 34).

6. Générateur tel que revendiqué dans une quelconque des revendications 2 à 5, comportant au moins un circuit hydraulique pour l'extraction de l'énergie de la pression hydraulique à partir du mouvement relatif des pontons, le circuit comprenant au moins une pompe à huile linéaire reliée entre le corps inertiel et un ponton, ainsi qu'un collecteur de pression (35) dans lequel l'énergie de pression hydraulique transférée depuis la pompe le long des lignes hydrauliques est emmagasinée lorsque la pompe est déplacée entre une position d'extension et une position de rétraction.

7. Générateur tel que revendiqué dans la revendication 6, dans lequel le circuit comporte, pour chaque pompe, un premier accumulateur destiné à accepter l'énergie de la pression hydraulique lorsque la pompe est forcée de la position d'extension vers la position de rétraction, un deuxième accumulateur destiné à accepter l'énergie de la pression hydraulique lorsque la pompe est forcée de la position de rétraction vers la position d'extension, ainsi qu'un grand nombre de soupapes d'arrêt pour garantir que de l'énergie dérivée de la pompe est déviée vers le collecteur de pression.

8. Générateur tel que revendiqué dans la revendication 7, dans lequel le circuit est partagé en deux portions, une portion utilisant l'huile hydraulique emmagasinée et l'autre utilisant l'eau de mer sur laquelle le générateur flotte, les deux portions étant isolées l'une de l'autre par une barrière de transfert disposée dans chaque accumulateur.

9. Générateur tel que revendiqué dans une quelconque des revendications 6 à 8, dans lequel un grand nombre de pompes est relié à une collecteur de pression.

10. Générateur tel que revendiqué dans une quelconque des revendications 6 à 9, dans lequel le collecteur de pression fournit de l'eau sous pression pour l'activation d'une turbine servant à extraire d'énergie électrique ou à fournir de l'eau sous pression élevée vers une installation d'osmose inverse afin de préparer de l'eau potable à partir d'eau salée.

11. Générateur tel que revendiqué dans une quelconque des revendications 2 à 10, dans lequel le corps inertiel du générateur comporte une plaque d'inertie (20) qui peut être actionnée pour limiter le mouvement vertical du corps inertiel dans l'eau.
